# EUROPÄISCHE PATENTSCHRIFT

(11) **EP 3 191 804 B1**
(45) Veröffentlichungstag und Bekanntmachung des Hinweises auf die Patenterteilung: **12.01.2022**
(21) Anmeldenummer: 15738709.3
(22) Anmeldetag: 22.07.2015
(51) Int. Cl.: G01F 1/684, G01F 15/14

(54) **SENSORANORDNUNG ZUR BESTIMMUNG WENIGSTENS EINES PARAMETERS EINES DURCH EINEN MESSKANAL STRÖMENDEN FLUIDEN MEDIUMS**
SENSOR ARRANGEMENT FOR DETERMINING AT LEAST ONE PARAMETER OF A FLUID MEDIUM FLOWING THROUGH A MEASUREMENT CHANNEL
DISPOSITIF DE DÉTECTION POUR DÉTERMINER AU MOINS UN PARAMÈTRE D'UN MILIEU FLUIDE S'ÉCOULANT DANS UN CONDUIT DE MESURE

(30) Priorität: 08.09.2014 DE 102014217870
(43) Veröffentlichungstag der Anmeldung: 19.07.2017
(73) Patentinhaber: Robert Bosch GmbH, 70442 Stuttgart (DE)
(72) Erfinder: MAIS, Torsten, 71636 Ludwigsburg (DE); BRIESE, Achim, 71277 Rutesheim (DE); WAGNER, Ulrich, 80689 Muenchen (DE); KONZELMANN, Uwe, 71679 Asperg (DE)
(86) Internationale Anmeldenummer: PCT/EP2015/066733
(87) Internationale Veröffentlichungsnummer: WO 2016/037750

(56) Entgegenhaltungen:
- EP-A1- 2 525 197
- EP-A2- 0 369 592
- US-A- 4 478 076
- None

## Beschreibung

### Stand der Technik

Aus dem Stand der Technik sind zahlreiche Verfahren und Vorrichtungen zur Bestimmung einer Strömungseigenschaft fluider Medien, also von Flüssigkeiten und/oder Gasen, bekannt. Bei den Strömungseigenschaften kann es sich dabei um grundsätzlich beliebige physikalisch und/oder chemisch messbare Eigenschaften handeln, welche eine Strömung des fluiden Mediums qualifizieren oder quantifizieren. Insbesondere kann es sich dabei um eine Strömungsgeschwindigkeit und/oder einen Massenstrom und/oder einen Volumenstrom handeln.

Die Erfindung wird im Folgenden insbesondere beschrieben unter Bezugnahme auf so genannte Heißfilmluftmassenmesser, wie sie beispielsweise in Konrad Reif (Hrsg.): Sensoren im Kraftfahrzeug, 1. Auflage 2010, Seiten 146-148 beschrieben sind. Derartige Heißfilmluftmassenmesser basieren in der Regel auf einem Sensorchip, insbesondere einem Siliziumsensorchip, mit einer Sensormembran als Messoberfläche oder Sensorbereich, welche von dem strömenden fluiden Medium überströmbar ist. Der Sensorchip umfasst in der Regel mindestens ein Heizelement sowie mindestens zwei Temperaturfühler, welche beispielsweise auf der Messoberfläche des Sensorchips angeordnet sind. Aus einer Asymmetrie des von den Temperaturfühlern erfassten Temperaturprofils, welches durch die Strömung des fluiden Mediums beeinflusst wird, kann auf einen Massenstrom und/oder Volumenstrom des fluiden Mediums geschlossen werden. Heißfilmluftmassenmesser sind üblicherweise als Steckfühler ausgestaltet, welcher fest oder austauschbar in ein Strömungsrohr einbringbar ist. Beispielsweise kann es sich bei diesem Strömungsrohr um einen Ansaugtrakt einer Brennkraftmaschine handeln.

Dabei durchströmt ein Teilstrom des Mediums wenigstens einen in dem Heißfilmluftmassenmesser vorgesehenen Hauptkanal. Zwischen dem Einlass und dem Auslass des Hauptkanals ist ein Bypasskanal ausgebildet. Insbesondere ist der Bypasskanal derart ausgebildet, dass er einen gekrümmten Abschnitt zur Umlenkung des durch den Einlass des Hauptkanals eingetretenen Teilstroms des Mediums aufweist, wobei der gekrümmte Abschnitt im weiteren Verlauf in einen Abschnitt übergeht, in welchem der Sensorchip angeordnet ist. Der zuletzt genannte Abschnitt stellt den eigentlichen Messkanal dar, in dem der Sensorchip angeordnet ist. Dabei ist in dem Bypasskanal ein Mittel vorgesehen, welches die Strömung leitet und einer Ablösung der Strömung des Medienteilstroms von den Kanalwänden des Messkanals entgegenwirkt. Weiterhin ist der Einlassbereich des Hauptkanals im Bereich seiner Öffnung, welche der Hauptströmungsrichtung entgegenweist, mit schrägen oder gekrümmten Flächen versehen, welche so gestaltet sind, dass in den Einlassbereich einströmendes Medium von dem Teil des Hauptkanals, welcher zu dem Sensorchip führt, weggelenkt wird. Dies bewirkt, dass im Medium enthaltene Flüssigkeits- oder Festkörperteilchen aufgrund ihrer Massenträgheit nicht zu dem Sensorchip gelangen und diesen verschmutzen können.

Derartige Heißfilmluftmassenmesser müssen in der Praxis einer Vielzahl von Anforderungen und Randbedingungen genügen. Neben dem Ziel, einen Druckabfall an dem Heißfilmluftmassenmesser insgesamt durch geeignete strömungstechnische Ausgestaltungen zu verringern, besteht eine der hauptsächlichen Herausforderungen darin, die Signalqualität sowie die Robustheit derartiger Vorrichtungen gegenüber Kontamination durch Öl- und Wassertröpfchen sowie Ruß-, Staub- und sonstige Festkörperpartikel weiter zu verbessern. Diese Signalqualität bezieht sich beispielsweise auf einen Massenstrom des Mediums durch den zu dem Sensorchip führenden Messkanal sowie gegebenenfalls auf die Verminderung einer Signaldrift und die Verbesserung des Signal-zu-Rauschen-Verhältnisses. Die Signaldrift bezieht sich dabei auf die Abweichung beispielsweise des Massenstromes des Mediums im Sinne einer Veränderung der Kennlinienbeziehung zwischen dem tatsächlich auftretenden Massenstrom und dem im Rahmen der Kalibrierung bei der Fertigung ermittelten auszugebenden Signales. Bei der Ermittlung des Signal-Rausch-Verhältnisses werden die in schneller zeitlicher Folge ausgegebenen Sensorsignale betrachtet, wohingegen sich die Kennlinien- oder Signaldrift auf eine Veränderung des Mittelwertes bezieht.

Bei üblichen Heißfilmluftmassenmessern der beschriebenen Art ragt in der Regel ein Sensorträger mit einem darauf angebrachten oder eingebrachten Sensorchip in den Messkanal hinein. Beispielsweise kann der Sensorchip in den Sensorträger eingeklebt oder auf diesen aufgeklebt sein. Der Sensorträger kann beispielsweise mit einem Bodenblech aus Metall, auf welchem auch eine Elektronik, eine Ansteuer- und Auswerteschaltung in Form einer Leiterplatte, aufgeklebt sein kann, eine Einheit bilden. Beispielsweise kann der Sensorträger als angespritztes Kunststoffteil eines Elektronikmoduls ausgestaltet sein. Der Sensorchip und die Ansteuer- und Auswerteschaltung können beispielsweise durch Bondverbindungen miteinander verbunden werden. Das derart entstandene Elektronikmodul kann beispielsweise in ein Sensorgehäuse eingeklebt werden und der gesamte Steckfühler kann mit Deckeln verschlossen werden.

Trotz der durch diese Sensoranordnung bewirkten Verbesserungen besteht nach wie vor ein Verbesserungspotential hinsichtlich der Signalerfassungsgenauigkeit.

Damit der Heißfilmluftmassenmesser ein möglichst störungsarmes Luftmassensignal liefern kann, ist eine möglichst gleichmäßige Zuströmung zu dem Steckfühler und durch den Messkanal in diesem und insbesondere über die Messoberfläche des Sensorchips wichtig. Zwischen einer Stirnseite des Sensorträgers und der Wand des Messkanals existiert ein Spalt, dessen Breite fertigungstechnischen Schwankungen unterworfen ist. Im Bereich des Sensorträgers teilt sich das in dem Messkanal strömende fluide Medium in drei Teilmassenströme. Ein erster Teilmassenstrom strömt über den Sensorträger und den Sensorchip, ein zweiter Teilmassenstrom strömt unter dem Sensorträger und ein dritter Teilmassenstrom strömt durch den Spalt. Nach der Umströmung des Sensorträgers bildet sich ein instabiler Nachlauf mit schwankenden Strömungsgeschwindigkeiten und Drücken aus. Dies führt dazu, dass sich auch stromaufwärts, insbesondere im Bereich des Sensorchips, schwankende Strömungsgrößen einstellen, die zu Schwankungen, insbesondere mit für die Abmessung des Sensorträgers und die Strömungsgeschwindigkeit typischen Schwingungsmodi, im Messsignal führen. Dieser Effekt stellt sich auch bei asymmetrischer Gestaltung der Wände des Messkanals ein. Herkömmliche Sensorträger sind symmetrisch gestaltet und begünstigen diese ungünstige Situation.

Aus der EP 2 525 197 A1 ist Heißfilmluftmassenmesser mit einem Messkanal und einem in den Messkanal hineinragenden Sensorträger, der einen Sensorchip trägt, bekannt.

### Offenbarung der Erfindung

Es wird daher eine Sensoranordnung zur Bestimmung wenigstens eines Parameters eines durch einen Messkanal strömenden fluiden Mediums vorgeschlagen, welche die Nachteile bekannter Verfahren und Strategien zumindest weitgehend vermeiden kann und bei der insbesondere die Kennlinienreproduzierbarkeit und die Abgleichbarkeit verbessert sowie das Signalrauschen und die Anströmempfindlichkeit reduziert sind.

Die Sensoranordnung zur Bestimmung wenigstens eines Parameters eines durch einen Messkanal strömenden fluiden Mediums, bei dem es sich um einen Ansaugluftmassenstrom einer Brennkraftmaschine handelt, weist ein Sensorgehäuse, insbesondere einen in ein Strömungsrohr eingebrachten oder einbringbaren Steckfühler, in dem der Messkanal ausgebildet ist, und mindestens einen in dem Messkanal angeordneten Sensorchip zur Bestimmung des Parameters des fluiden Mediums auf. Der Sensorchip ist auf einem in den Messkanal hineinragenden Sensorträger angebracht. Der Sensorträger ist so ausgebildet, dass er eine Profilsehne aufweist. Die Profilsehne weist eine Länge von 4,5 mm bis 6,5 mm auf.

Der Sensorträger weist bezüglich einer Hauptströmungsrichtung des fluiden Mediums in dem Messkanal einen Anströmabschnitt stromaufwärts des Sensorchips und einen Abströmabschnitt stromabwärts des Sensorchips auf. Der Abströmabschnitt ist zumindest teilweise abgerundet oder zumindest teilweise keilförmig ausgebildet. Der Sensorträger kann so ausgebildet sein, dass er in dem Abströmabschnitt einen bezüglich der Profilsehne asymmetrischen Querschnitt aufweist. Der Sensorträger kann eine Oberseite und eine dieser gegenüber liegende Unterseite aufweisen. Der Sensorchip kann auf der Oberseite angeordnet sein. Ein Abstand der Oberseite zu der Profilsehne kann größer sein als ein Abstand der Unterseite zu der Profilsehne. Der Sensorträger kann mindestens eine Segmentierung aufweisen. Der Sensorträger kann mindestens einen Vorsprung aufweisen. Der Vorsprung kann beispielsweise stufenförmig ausgebildet sein. Der Sensorträger kann an einem stromaufwärtigen Ende eine Anströmkante und an einem stromabwärtigen Ende eine Abströmkante aufweisen. Die Anströmkante und/oder die Abströmkante können mindestens eine Aussparung aufweisen. Die Aussparung kann dreieckig, halbrund, rechteckig und/oder sinusförmig ausgebildet sein. Der Sensorträger kann sich in einer Erstreckungsrichtung in den Messkanal erstrecken. Die Erstreckungsrichtung kann im Wesentlichen senkrecht zu der Hauptströmungsrichtung des fluiden Mediums in dem Messkanal sein. Der Sensorträger kann sich in der Erstreckungsrichtung verjüngen. Der Sensorträger kann sich in der Erstreckungsrichtung symmetrisch oder asymmetrisch verjüngen.

Unter der Hauptströmungsrichtung ist im Rahmen der vorliegenden Erfindung die lokale Strömungsrichtung des fluiden Mediums am Ort des Sensors bzw. der Sensoranordnung zu verstehen, wobei beispielsweise lokale Unregelmäßigkeiten wie zum Beispiel Turbulenzen unberücksichtigt bleiben können. Insbesondere kann unter der Hauptströmungsrichtung somit die lokale gemittelte Transportrichtung des strömenden fluiden Mediums verstanden werden. Die Hauptströmungsrichtung kann daher einerseits auf die Strömungsrichtung am Ort der Sensoranordnung selbst bezogen sein oder auch auf die Strömungsrichtung in dem Kanal innerhalb des Sensorgehäuses, wie beispielsweise am Ort des Sensorträgers oder des Sensorchips, wobei sich beide genannten Hauptströmungsrichtungen unterscheiden können. Im Rahmen der vorliegenden Erfindung wird deshalb stets angegeben, auf welchen Ort sich die Hauptströmungsrichtung bezieht. Sofern keine nähere Angabe gemacht ist, bezieht sich die Hauptströmungsrichtung auf den Ort der Sensoranordnung.

Unter einer stromabwärtigen Anordnung ist im Rahmen der vorliegenden Erfindung die Anordnung eines Bauteils an einer Stelle zu verstehen, die das fluide Medium in der Hauptströmungsrichtung strömend zeitlich später als einen Bezugspunkt erreicht.

Analog ist im Rahmen der vorliegenden Erfindung unter einer stromaufwärtigen Anordnung eines Bauteils eine Anordnung des Bauteils an einer Stelle zu verstehen, die das in der Hauptströmungsrichtung strömende fluide Medium zeitlich gesehen früher als einen Bezugspunkt erreicht.

Im Rahmen der vorliegenden Erfindung kann der Sensorträger ganz oder teilweise als Schaltungsträger, insbesondere als Leiterplatte, ausgestaltet sein oder Teil eines Schaltungsträgers, insbesondere einer Leiterplatte, sein. Beispielsweise kann der Schaltungsträger, insbesondere die Leiterplatte, einen Fortsatz aufweisen, welcher den Sensorträger bildet und welcher in den Kanal, beispielsweise den Messkanal eines Heißfilmluftmassenmessers, hineinragt. Der übrige Teil des Schaltungsträgers, insbesondere der Leiterplatte, kann beispielsweise in einem Elektronikraum, in einem Gehäuse der Sensoranordnung oder eines Steckfühlers der Sensoranordnung untergebracht sein.

Unter einer Leiterplatte ist dabei im Rahmen der vorliegenden Erfindung allgemein ein im Wesentlichen plattenförmiges Element zu verstehen, welches auch als Träger elektronischer Strukturen, wie beispielsweise Leiterbahnen, Anschlusskontakte oder Ähnliches, genutzt werden kann und vorzugsweise auch eine oder mehrere derartiger Strukturen aufweist. Grundsätzlich kommen dabei auch zumindest leichte Abweichungen von der Plattenform in Betracht und sollen begrifflich mit erfasst sein. Die Leiterplatte kann beispielsweise aus einem Kunststoffmaterial und/oder einem Keramikmaterial hergestellt sein, beispielsweise einem Epoxidharz, insbesondere einem faserverstärkten Epoxidharz. Insbesondere kann die Leiterplatte beispielsweise als Leiterplatte mit Leiterbahnen, insbesondere aufgedruckten Leiterbahnen (printed circuit board, PCB), ausgestaltet sein.

Auf diese Weise lässt sich das Elektronikmodul der Sensoranordnung stark vereinfachen und es lässt sich beispielsweise auf ein Bodenblech und einen separaten Sensorträger verzichten. Bodenblech und Sensorträger können durch eine einzige Leiterplatte ersetzt werden, auf welcher beispielsweise auch eine Ansteuer- und Auswerteschaltung der Sensoranordnung ganz oder teilweise angeordnet sein kann. Diese Ansteuer- und Auswerteschaltung der Sensoranordnung dient der Ansteuerung des mindestens einen Sensorchips und/oder der Auswertung der von diesem Sensorchip generierten Signale. Auf diese Weise lässt sich durch Zusammenfassung der genannten Elemente der Herstellaufwand der Sensoranordnung erheblich vermindern und der Bauraumbedarf für das Elektronikmodul stark verringern.

Die Sensoranordnung kann insbesondere mindestens ein Gehäuse aufweisen, wobei der Kanal in dem Gehäuse ausgebildet ist. Beispielsweise kann der Kanal einen Hauptkanal und einen Bypasskanal bzw. Messkanal umfassen, wobei der Sensorträger und der Sensorchip beispielsweise in dem Bypass- bzw. Messkanal angeordnet sein können. Weiterhin kann das Gehäuse einen von dem Bypasskanal getrennten Elektronikraum aufweisen, wobei das Elektronikmodul oder die Leiterplatte im Wesentlichen in dem Elektronikraum aufgenommen ist. Der Sensorträger kann dann als ein in den Kanal hineinragender Fortsatz der Leiterplatte ausgebildet sein. Diese Anordnung ist technisch vergleichsweise einfach zu realisieren, im Gegensatz zu den aufwändigen Elektronikmodulen, welche aus dem Stand der Technik bekannt sind.

Insbesondere in dem Fall, in welchem eine Leiterplatte als Sensorträger verwendet wird, jedoch auch in anderen Fällen und/oder unter Verwendung anderer Medien als Sensorträger, kann der Sensorträger zumindest teilweise als mehrschichtiger Sensorträger ausgestaltet sein. So kann der Sensorträger in einer so genannten Multilayer-Technik ausgestaltet sein und zwei oder mehrere miteinander verbundene Trägerschichten aufweisen. Beispielsweise können diese Trägerschichten wiederum aus einem Metall, einem Kunststoff oder einem Keramikmaterial oder einem Verbundmaterial hergestellt sein und durch Verbindungstechniken, wie z. B. Kleben, miteinander verbunden sein.

In diesem Fall, in welchem eine Multilayer-Technik verwendet wird mit mehreren Sensorschichten des Sensorträgers, kann die Anströmkante durch eine unterschiedliche Dimensionierung der Trägerschichten entgegen der Hauptströmungsrichtung des fluiden Mediums zumindest teilweise gestuft ausgeführt sein. Auf diese Weise lassen sich die Profile zumindest gestuft angenähert realisieren. Beispielsweise lassen sich auf diese Weise rechteckig geformte oder - angenähert durch eine Stufenform - zumindest näherungsweise rund-, abgerundete oder keilförmig geformte Profile in einer Schnittebene senkrecht zur Erstreckungsebene des Sensorträgers ausbilden. Der Sensorchip kann auf bzw. in dem Sensorträger derart angeordnet sein, dass dieser senkrecht zur lokalen Hauptströmungsrichtung ausgerichtet ist. Beispielsweise kann der Sensorchip rechteckig ausgestaltet sein, wobei eine Seite dieses Rechtecks senkrecht oder im Wesentlichen senkrecht, beispielsweise mit einer Ausrichtung, welche um nicht mehr als 10 Grad von der Senkrechten abweicht, zur lokalen Hauptströmungsrichtung angeordnet ist.

Der Sensorchip kann über mindestens eine elektrische Verbindung elektrisch kontaktiert werden. Beispielsweise kann der Sensorträger, insbesondere eine den Sensorträger bildende Leiterplatte oder ein Fortsatz dieser Leiterplatte, einen oder mehrere Leiterbahnen und/oder Kontaktpads aufweisen, welche mit entsprechenden Kontakten auf dem Sensorchip beispielsweise durch ein Bondingverfahren verbunden sind. In diesem Fall kann die elektrische Verbindung durch mindestens eine Abdeckung geschützt und von dem fluiden Medium getrennt werden. Diese Abdeckung kann insbesondere als so genannter Glob-Top ausgestaltet sein, beispielsweise als Kunststofftropfen und/oder Klebstofftropfen, welcher die elektrische Verbindung, beispielsweise die Bonddrähte abdeckt. Auf diese Weise lassen sich insbesondere auch Beeinflussungen der Strömung durch die elektrische Verbindung vermindern, da der Glob-Top eine glatte Oberfläche aufweist.

Ferner kann der Sensorchip mindestens einen Sensorbereich aufweisen. Dieser Sensorbereich kann beispielsweise eine Sensoroberfläche aus beispielsweise einem porösen, keramischen Material und/oder insbesondere eine Sensormembran sein. Die Sensormembran als Messoberfläche oder Sensorbereich kann von dem strömenden fluiden Medium überströmbar sein. Der Sensorchip umfasst beispielsweise mindestens ein Heizelement sowie mindestens zwei Temperaturfühler, welche beispielsweise auf der Messoberfläche des Sensorchips angeordnet sind, wobei ein Temperaturfühler stromaufwärts des Heizelements und der andere Temperaturfühler stromabwärts des Heizelements gelagert ist. Aus einer Asymmetrie des von den Temperaturfühlern erfassten Temperaturprofils, welches durch die Strömung des fluiden Mediums beeinflusst wird, kann auf einen Massenstrom und/oder Volumenstrom des fluiden Mediums geschlossen werden.

Unter einem Anströmabschnitt des Sensorträgers ist im Rahmen der vorliegenden Erfindung derjenige Abschnitt des Sensorträgers zu verstehen, der sich stromaufwärts des Sensorchips befindet.

Analog ist unter einem Abströmabschnitt des Sensorträgers im Rahmen der vorliegenden Erfindung derjenige Abschnitt des Sensorträgers zu verstehen, der sich stromabwärts des Sensorchips befindet.

Unter einer Profilsehne ist im Rahmen der vorliegenden Erfindung eine gedachte Verbindungslinie des Sensorträgers zwischen seiner Profilnase und der Profilhinterkante zu verstehen. Die Profilnase ist dabei die stromaufwärts befindliche, der anströmenden Luft zugewandte Kante des Sensorträgers. Entsprechend ist die Profilhinterkante die der anströmenden Luft abgewandte Kante.

Unter einer Segmentierung ist im Rahmen der vorliegenden Erfindung eine unterbrochene Ausbildung eines Bauteils zu verstehen. Das Bauteil besteht somit aus Segmenten.

Ein Grundgedanke der vorliegenden Erfindung ist die Ausbildung einer verringerten Lauflänge des Sensorträgers entsprechend dem zweiten Stokesschen Problem sowie einer aerodynamisch günstigeren Anströmung des Sensorträgers bei Rückströmung mit einem verringerten Pulsationsfehler. So sorgen beispielsweise abgerundete, in Teilbereichen abgerundete oder abschnittsweise keilförmig ausgestaltete Sensorträgerquerschnitte im Bereich der Sensorträgerhinterkante für eine geometrisch definierte Ablösung bei Vorwärtsströmung sowie eine aerodynamisch günstige Anströmung, verbunden mit einer weitgehend ablösefreien Überströmung des Sensorchips bei Rückströmung. Eine asymmetrische Ausführung des Sensorträgers im Bereich der Sensorträgerhinterkante führt zu einer Reduzierung des fluktuierenden Nachlaufes und schwankender Ablösebereiche ein- oder beidseitig im Bypasskanal, zur Erhöhung des zulässigen Anstellwinkelbereiches aufgrund der effektiven Profilwölbung und zur Erhöhung der Kennlinienreproduzierbarkeit und Verringerung des Signalrauschens. Eine Segmentierung des Sensorträgers bewirkt eine Strukturierung der Sensorträgerüberströmung. Auf der Seite des Sensorchips sorgt eine zusätzliche Ausbildung einer bezogen auf den Grundquerschnitt erhöhten Oberfläche mit zurückspringender Stufe, beispielsweise in Form eines Spoilers, für eine geometrisch definierte, stabile Ablösung auf der Seite des Sensorchips. Dreieckige, halbrunde, rechteckige und/oder sinusförmige Aussparungen der Sensorträgervorder- und/oder - hinterkante bewirken eine Strömungsstrukturierung sowohl bei Vorwärts- als auch Rückwärtsströmung.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: perspektivische Ansicht einer Sensoranordnung,
- Figur 2: eine vergrößerte Ansicht eines Elektronikmoduls der Sensoranordnung,
- Figur 3: eine Draufsicht auf den Messkanaldeckel mit dem Messkanal und dem Sensorträger,
- Figur 4: eine Querschnittsansicht des Messkanaldeckels,
- Figur 5: eine perspektivische Querschnittsansicht des Messkanaldeckels,
- Figur 6: eine Darstellung der Anordnung des Sensorträgers in dem Messkanaldeckel und des Messkanals,
- Figur 7: eine Querschnittsansicht entlang der Linie A-A der Figur 6,
- Figur 8: eine Darstellung von Strömungsbedingungen anhand der Ausbildung der Figur 7,
- Figur 9: eine Draufsicht auf den Messkanaldeckel gemäß einer ersten Ausführungsform der vorliegenden Erfindung,
- Figur 10: eine Querschnittsansicht des Messkanaldeckels gemäß der ersten Ausführungsform,
- Figur 11: eine Querschnittsansicht des Messkanaldeckels gemäß einer zweiten Ausführungsform der vorliegenden Erfindung,
- Figur 12: eine perspektivische Ansicht des Sensorträgers gemäß der zweiten Ausführungsform,
- Figur 13: eine Unteransicht des Messkanaldeckels gemäß einer dritten Ausführungsform der vorliegenden Erfindung,
- Figur 14: eine Querschnittsansicht des Sensorträgers entlang der Linie A-A der Figur 13,
- Figur 15: eine Querschnittsansicht des Sensorträgers entlang der Linie B-B der Figur 13,
- Figur 16: eine Querschnittsansicht des Sensorträgers entlang der Linie A-A der Figur 13 gemäß einer vierten Ausführungsform,
- Figur 17: eine Querschnittsansicht des Sensorträgers entlang der Linie B-B der Figur 13 gemäß der vierten Ausführungsform,
- Figur 18: eine Querschnittsansicht eines Sensorträgers gemäß einer fünften Ausführungsform,
- Figur 19: eine vergrößerte Querschnittsansicht des Sensorträgers der fünften Ausführungsform,
- Figur 20: eine Draufsicht eines Sensorträgers gemäß einer sechsten Ausführungsform,
- Figur 21: eine Seitenansicht eines Sensorträgers gemäß einer siebten Ausführungsform,
- Figur 22: eine Draufsicht eines Sensorträgers gemäß einer achten Ausführungsform,
- Figur 23: eine Draufsicht eines Sensorträgers gemäß einer neunten Ausführungsform,
- Figur 24: eine Draufsicht eines Sensorträgers gemäß einer zehnten Ausführungsform,
- Figur 25: eine Unteransicht eines Sensorträgers gemäß einer elften Ausführungsform,
- Figur 26: eine Unteransicht eines Sensorträgers gemäß einer zwölften Ausführungsform und
- Figur 27: eine Unteransicht eines Sensorträgers 40 gemäß einer dreizehnten Ausführungsform.

### Ausführliche Beschreibung der Ausführungsformen der Erfindung

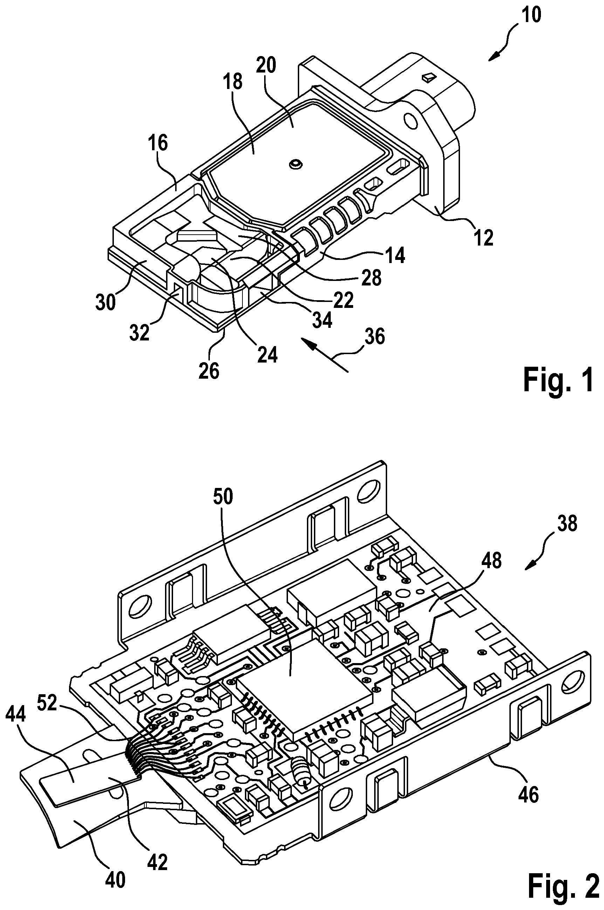

Figur 1 zeigt eine perspektivische Ansicht einer Sensoranordnung 10 zur Bestimmung eines Parameters eines fluiden Mediums. Die Sensoranordnung 10 ist als Heißfilmluftmassenmesser ausgestaltet und umfasst ein als Steckfühler ausgebildetes Sensorgehäuse 12, welches beispielsweise in ein Strömungsrohr, insbesondere einen Ansaugtrakt einer Brennkraftmaschine, eingesteckt werden kann. Das Sensorgehäuse 12 weist einen Gehäusekörper 14, einen Messkanaldeckel 16, einen Elektronikraum 18 sowie einen Elektronikraumdeckel 20 zum Verschließen des Elektronikraums 18 auf. In dem Messkanaldeckel 16 ist eine Kanalstruktur 22 ausgebildet. Die Kanalstruktur 22 weist einen Hauptkanal 24, welcher in einem Hauptstromauslass (nicht gezeigt) auf der Unterseite 26 bezogen auf die Darstellung in Figur 1 des Sensorgehäuses 12 mündet, sowie einen von dem Hauptkanal 24 abzweigenden Bypass- bzw. Messkanal 28, welcher in einen auf einer Stirnseite 30 des Sensorgehäuses 12 angeordneten Bypass- oder Messkanalauslass 32 mündet, auf. Durch die Kanalstruktur 22 kann über eine Einlassöffnung 34, die im eingesetzten Zustand einer Hauptströmungsrichtung 36 des fluiden Mediums am Ort des Sensorgehäuses 12 entgegenweist, eine repräsentative Menge des fluiden Mediums strömen.

Figur 2 zeigt eine vergrößerte Darstellung eines Elektronikmoduls 38 der Sensoranordnung 10. In einem eingesetzten Zustand des Elektronikmoduls 38 ragt ein Sensorträger 40 in den Messkanal 28. In diesen Sensorträger 40 ist ein Sensorchip 42 derart eingelassen, dass eine als Sensorbereich des Sensorchips 42 ausgebildete mikromechanische Sensormembran 44 von dem fluiden Medium überströmbar ist. Der Sensorträger 42 ist mit dem Sensorchip 42 Bestandteil des Elektronikmoduls 38. Das Elektronikmodul 38 weist weiter ein gebogenes Bodenblech 46 sowie eine darauf angebrachte, beispielsweise aufgeklebte Leiterplatte 48 mit einer Ansteuer- und Auswerteschaltung 50 auf. Der Sensorchip 42 ist mit der Ansteuer- und Auswerteschaltung 50 über elektrische Verbindungen 52, welche hier als Drahtbonding ausgestaltet sind, elektrisch verbunden. Das derart entstandene Elektronikmodul 38 wird in den Elektronikraum 18 in dem Gehäusekörper 14 des Sensorgehäuses 12 eingebracht, wie beispielsweise eingeklebt. Dabei ragt der Sensorträger 40 in die Kanalstruktur 22 hinein. Anschließend wird der Elektronikraum 18 von dem Elektronikraumdeckel 20 verschlossen.

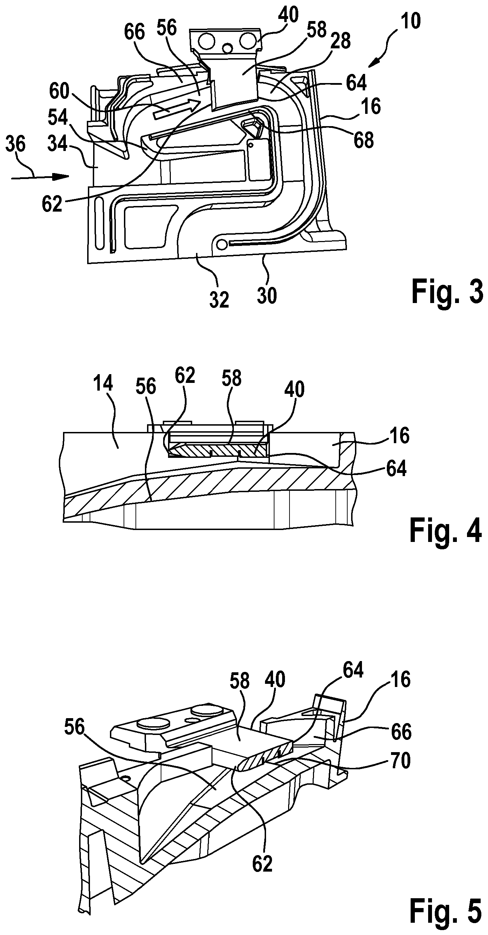

Figur 3 zeigt eine Draufsicht auf die Kanalstruktur 22 in dem Messkanaldeckel 16. In dem Messkanaldeckel 16 ist eine Fliehkraftumlenkung 54 angeordnet. Der Messkanaldeckel 16 ist weiter so ausgebildet, dass in dem Messkanal 28 eine Messkanalrampe 56 ausgebildet ist. Des Weiteren ist aus Figur 3 die Anordnung des Sensorträgers 40 zu erkennen. Der Sensorträger 40 ragt in einem eingesetzten Zustand in den Messkanal 28. Bei der Ansicht der Figur 3 ist der Sensorträger 40 mit seiner Rück- oder Unterseite 58 zu erkennen. Die Rückoder Unterseite 58 ist die der Sensormembran 44 gegenüberliegende Seite des Sensorträgers 40. Der Sensorträger 40 weist weiter eine einer Hauptströmungsrichtung 60 des fluiden Mediums in dem Messkanal 28 entgegenweisende Vorderkante bzw. Anströmkante 62, die abgerundet ausgebildet sein kann, sowie eine der Anströmkante 62 stromabwärts gegenüberliegende Hinterkante 64 auf. Die Messkanalrampe 56 erstreckt sich in dem Bereich zwischen der Fliehkraftumlenkung 54 und der Hinterkante 64 des Sensorträgers 40. Die Messkanalrampe 56 kann sich optional bis zu einem Bereich stromabwärts der Hinterkante 64 des Sensorträgers 40 erstrecken. Der Messkanal 28 ist zumindest im Bereich des Sensorchips 42 von dem Gehäusekörper 14, dem Messkanaldeckel 16, einem elektronikraumzugewandten Wandabschnitt 66 und einem elektronikraumabgewandten Wandabschnitt 68 begrenzt.

Figur 4 zeigt eine Querschnittsansicht des Messkanaldeckels 16, wobei der Schnitt auch durch den Sensorträger 40 verläuft. Aus der Darstellung der Figur 4 ist zu erkennen, dass durch die Messkanalrampe 56 mit zunehmender Lauflänge der Strömungsquerschnitt in dem Messkanal 28 immer kleiner wird, was zusammen mit einer Querschnittsverringerung bedingt durch den Sensorträger 40 zu einer Beschleunigung der Strömung und zu einer Reduzierung des Schwankungsanteils des strömenden fluiden Mediums führt. Gut zu erkennen ist ein Abflachen bzw. eine annähernd zu dem Sensorträger 40 parallele Ausbildung der Messkanalrampe 56 im Bereich der Hinterkante 64 des Sensorträgers 40.

Figur 5 zeigt eine perspektivische Querschnittsansicht des Messkanaldeckels 16 in dem Bereich des Sensorträgers 40. Zu erkennen ist ein Spalt 70 zwischen derjenigen Seite des Sensorträgers 40, in der der Sensorchip 42 mit der Sensormembran 44 eingelassen ist, und der Messkanalrampe 56. Durch diesen Spalt 70 strömt ein Teilstrom des innerhalb des Messkanals 28 strömenden fluiden Mediums. Des Weiteren ist aus Figur 5 zu erkennen, dass Führung und Konditionierung des strömenden fluiden Mediums maßgeblich von der Messkanalrampe 56 und dem Sensorträger 40 beeinflusst werden.

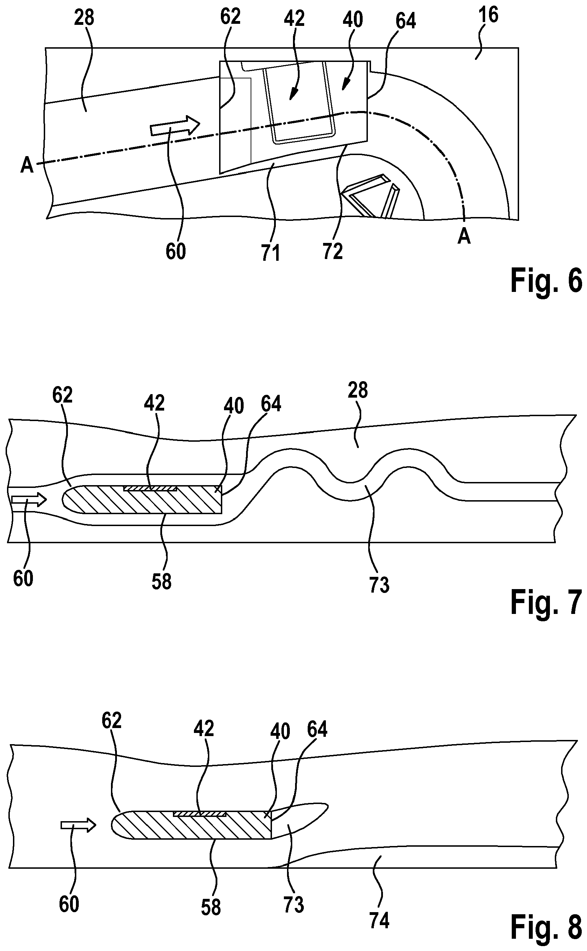

Figur 6 zeigt eine Anordnung des Sensorträgers 40 in dem Messkanaldeckel 16 und genauer in dem Messkanal 28. Insbesondere zeigt Figur 6 die unmodifizierten geometrischen Verhältnisse im Messkanal 28 im Bereich des Sensorträgers 40. Der Sensorchip 42 befindet sich in dieser Ansicht auf der Rückseite des Sensorträgers 40. Die Luft überstreicht im Normalbetrieb, also bei Vorwärtsströmung vom Luftfilter zum Motor, den Sensorträger 40 auf der dem Sensorchip 42 zu- und abgewandten Seite und in einem Spalt 71 zwischen einer Stirnseite 72 des Sensorträgers 40 und der gegenüberliegenden Kanalwand des Messkanals 28. Nach dem Sensorträger 40 folgt eine Krümmung des Messkanals 28. Zwischen der Stirnseite 72 des Sensorträgers 40 und der Wand des Messkanals 28 existiert der Spalt 71, dessen Breite fertigungstechnischen Schwankungen unterworfen ist. Der Massenstrom in dem Messkanal 28 teilt sich entsprechend in Teilmassenströme oberhalb des Sensorträgers 40, unterhalb des Sensorträgers 40 und durch den Spalt 71.

Figur 7 zeigt eine Querschnittsansicht des Messkanaldeckels 16 entlang der Linie A-A der Figur 6. Dargestellt ist eine mögliche Strömungssituation. Nach der Umströmung des Sensorträgers 40 bildet sich ein instabiler Nachlauf 73 mit schwankenden Geschwindigkeiten und Drücken aus. Dies führt dazu, dass sich auch stromaufwärts, insbesondere im Bereich des Sensorchips 42, schwankende Strömungsgrößen einstellen, die zu Schwankungen im Messsignal führen. Dieser Effekt stellt sich trotz asymmetrischer Gestaltung der Wände des Messkanals 28 ein. Ein herkömmlicher Sensorträger 40 ist symmetrisch gestaltet und begünstigt daher ungünstige Strömungssituationen.

Figur 8 zeigt eine weitere Querschnittsansicht des Messkanaldeckels 16 entlang der Linie A-A der Figur 6. Eine weitere mögliche Strömungsausbildung ist in Figur 8 dargestellt. In dieser Situation entsteht zusätzlich zu dem in Figur 7 dargestellten vorhandenen fluktuierenden Nachlaufgebiet 73 hinter dem Sensorträger 40 bzw. stromabwärts des Sensorträgers 40 bezüglich der Hauptströmungsrichtung 60 in dem Messkanal 28 ein Ablöse- und Rezirkulationsgebiet 74 an der Wand des Messkanals 28. Aufgrund der plötzlichen Veränderungen des Querschnitts des Messkanals 28 auf Höhe der Hinterkante 64 des Sensorträgers 40 entsteht eine Verlangsamung der Strömung verbunden mit einem Druckanstieg. Aufgrund des Druckanstiegs und der Reibungskräfte an den Kanalwänden löst sich die Strömung schließlich an einer oder beiden Kanalwänden ab. Solch eine druckinduzierte Ablösung ist typischerweise weder orts- noch zeitstabil. Der Ablösepunkt, also die erstmalige Entfernung der bis dahin wandparallelen Stromlinien von der Wand, die Dicke, also die Ausdehnung der so genannten Ablöseblase in das Kernströmungsgebiet, und auch die Länge der Ablöseblase variieren. Dabei interagiert die Ablösung mit dem unmittelbaren Nachlauf des Sensorträgers 40. Aufgrund der Divergenz der in Abbildung 8 oben befindlichen Wand des Messkanals 28 und der dynamisch anfachenden Nachlaufströmung des Sensorträgers 40 kann es schließlich sogar vorkommen, dass das Ablösegebiet zur anderen, in Figur 8 oben dargestellten Wand des Messkanals 28 springt. Bezüglich der Pulsationseigenschaften erscheinen sowohl die relativ große Lauflänge der Strömung auf der dem Sensorchip 42 zugewandten Seite als auch die bei Rückwärtsströmung im ca. 90°-Winkel angeströmte Sensorträgerrückwand nachteilig.

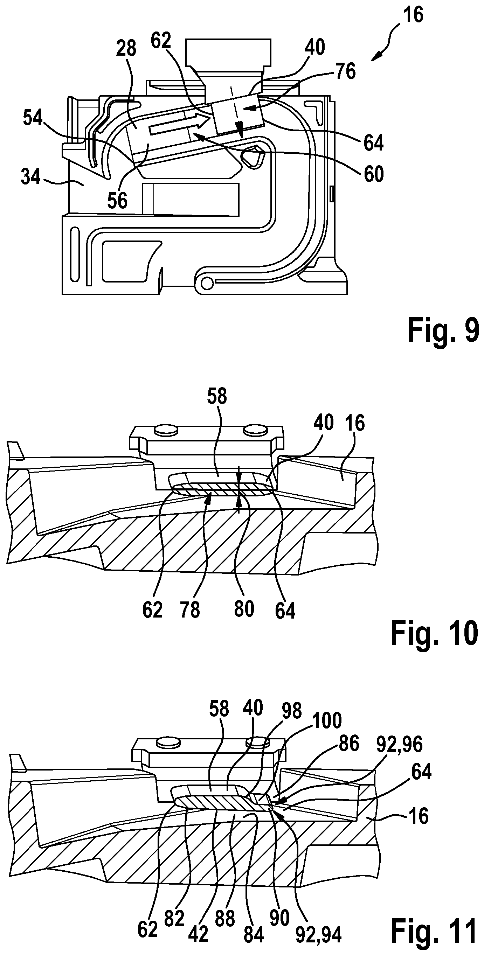

Figur 9 zeigt eine Draufsicht auf den Messkanaldeckel 16 gemäß einer ersten Ausführungsform der vorliegenden Erfindung. Der Sensorträger 40 erstreckt sich entlang einer Erstreckungsrichtung 76 in den Messkanal 28. Die Erstreckungsrichtung 76 ist im Wesentlichen senkrecht zu der Hauptströmungsrichtung 60 des fluiden Mediums in dem Messkanal 28.

Figur 10 zeigt eine Querschnittsansicht des Messkanaldeckels 16 gemäß der ersten Ausführungsform. Der Sensorträger 40 weist eine Profilsehne 78 auf. Die Profilsehne 78 weist eine Länge von 4,5 mm bis 6,5 mm auf, beispielsweise 5,5 mm. Entsprechend ist der Sensorträger 40 in der Hauptströmungsrichtung 60 des fluiden Mediums in dem Messkanal 28 gesehen deutlich kürzer als herkömmliche Sensorträger ausgebildet, deren Profilsehne eine Länge von mindestens 7,0 mm aufweist. Eine Dicke 80 des Querschnitts des Sensorträgers 40 kann von 0,5 mm bis 3,0 mm sein, beispielsweise 1,0 mm. Im Gegensatz zur herkömmlichen Ausführungsform weist die in Figur 10 dargestellte Ausführungsform eine abgerundete Hinterkante 64 auf. Somit weist der Sensorträger 40 bei der ersten Ausführungsform eine abgerundete Vorderkante oder Anströmkante 62 als auch eine abgerundete Hinterkante 64 auf. Dadurch ist der Sensorträger 40 in Form einer Doppel-Ellipse ausgebildet.

Figur 11 zeigt eine Querschnittsansicht des Messkanaldeckels 16 gemäß einer zweiten Ausführungsform. Nachstehend werden lediglich die Unterschiede zu der vorhergehenden Ausführungsform beschrieben und gleiche Bauteile sind mit gleichen Bezugszeichen versehen. Der Sensorträger 40 weist bezüglich der Hauptströmungsrichtung 60 des fluiden Mediums in dem Messkanal 28 einen Anströmabschnitt 82 stromaufwärts des Sensorchips 42 und einen Abströmabschnitt 84 stromabwärts des Sensorchips 42 auf. Der Abströmabschnitt 84 ist zumindest teilweise abgerundet oder zumindest teilweise keilförmig ausgebildet. Bei dem gezeigten Ausführungsbeispiel ist der Abströmabschnitt 84 in Form eines Sprungbretts 86 ausgebildet. Entsprechend weist der Sensorträger 40 auf der Seite des Sensorchips 42, d.h. der Oberseite 88, bei Fortführung der ebenen Fläche im Bereich des Sensorchips 42 einen schmalen Querschnitt 90 auf, dessen Kanten 92 bei dieser Ausführung mit verschieden großen Radien 94, 96 versehen sein können Auf der dem Sensorchip 42 abgewandten Unterseite 58 hingegen springt die Kontur über zwei Radien 98, 100 in Richtung der Oberseite 88 zurück und ist an der Hinterkante 64 ebenfalls mit einem Radius versehen. Im Mikrospritzgussverfahren lassen sich aktuell Radien bis minimal 0,1 mm realisieren. Größere Radien im Bereich der Hinterkante 64 mit Werten bis 2 mm sowie Radien im Bereich der zurückspringenden Kontur der Unterseite 58 mit Werten von 0,1 mm bis 10 mm sind denkbar.

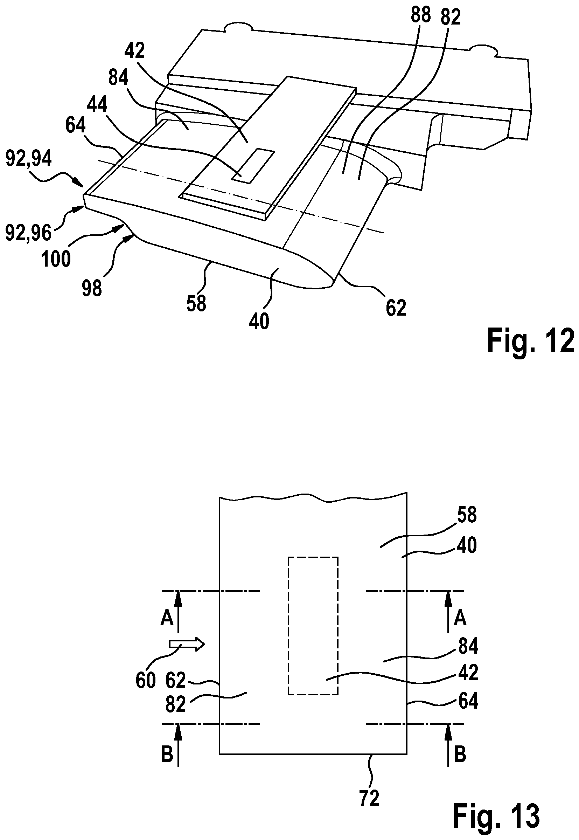

Figur 12 zeigt eine perspektivische Ansicht des Sensorträgers 40 gemäß der zweiten Ausführungsform. Insbesondere ist die sprungbrettartige Ausbildung des Abströmabschnitts 84 zu erkennen. Dabei sind auch die verschiedenen Radien 94, 96, 98, 100 der Querschnittskontur zu erkennen.

Figur 13 zeigt eine Unteransicht eines Sensorträgers 40 gemäß einer dritten Ausführungsform. Nachstehend werden lediglich die Unterschiede zu den vorhergehenden Ausführungsformen beschrieben und gleiche Bauteile sind mit gleichen Bezugszeichen versehen. Angedeutet ist die Lage des Sensorchips 42 auf der Oberseite 88 des Sensorträgers 40.

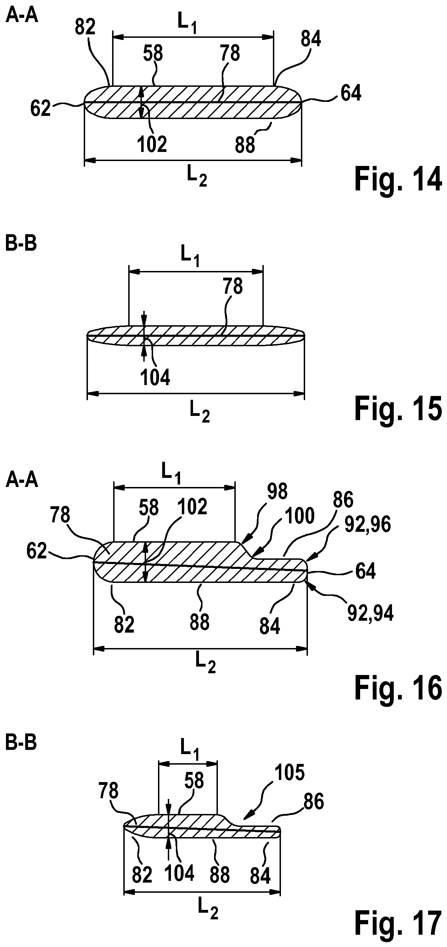

Figur 14 zeigt eine Querschnittsansicht des Sensorträgers 40 entlang der Linie A-A der Figur 13. Bei dem Sensorträger 40 der dritten Ausführungsform ist der Abströmabschnitt 84 symmetrisch bezüglich der Profilsehne 78 ausgebildet.

Figur 15 zeigt eine Querschnittsansicht des Sensorträgers 40 entlang der Linie B-B der Figur 13. Bei dem Sensorträger 40 der dritten Ausführungsform ist der Abströmabschnitt 84 symmetrisch bezüglich der Profilsehne 78 ausgebildet.

Allerdings weist der Sensorträger 40 im Bereich des Sensorchips 42 eine größere Dicke als in übrigen Bereichen auf. Bei Betrachtung der Querschnitte entlang der Linie A-A und B-B der Figur 13 fällt diese besondere Ausbildung auf.

So weist der Sensorträger 40 entlang der Linie A-A der Figur 13 eine größere Dicke 102 im Vergleich zu der Dicke 104 entlang der Linie B-B der Figur 13 auf.

Figur 16 zeigt eine Querschnittsansicht eines Sensorträgers 40 gemäß einer vierten Ausführungsform. Nachstehend werden lediglich die Unterschiede zu den vorhergehenden Ausführungsformen beschrieben und gleiche Bauteile sind mit gleichen Bezugszeichen versehen. Der Schnitt verläuft dabei entlang der Linie A-A der Figur 13. Angedeutet ist die Lage des Sensorchips 42 auf der Oberseite 88 des Sensorträgers 40. Die vierte Ausführungsform ist basiert auf der zweiten Ausführungsform und kombiniert Details der dritten Ausführungsform. Zu erkennen ist die Ausbildung des Sensorträgers 40 mit dem Sprungbrett 86 an dem Abströmabschnitt 84 und die dort ausgebildeten Radien 92, 94, 98, 100 der Querschnittskontur.

Figur 17 zeigt eine Querschnittsansicht des Sensorträgers 40 entlang der Linie B-B der Figur 13. Der Sensorträger 40 weist im Bereich des Sensorchips 42 eine größere Dicke als in übrigen Bereichen auf. Bei Betrachtung der Querschnitte entlang der Linie A-A und B-B der Figur 13 für die vierte Ausführungsform fällt diese besondere Ausbildung auf. So weist der Sensorträger 40 entlang der Linie A-A der Figur 13 für die vierte Ausführungsform eine größere Dicke 102 im Vergleich zu der Dicke 104 entlang der Linie B-B der Figur 13 für die vierte Ausführungsform auf. Auch kann der Übergang von der Unterseite 58 zu dem Sprungbrett 86 in Form eines Splines 105 ausgebildet sein.

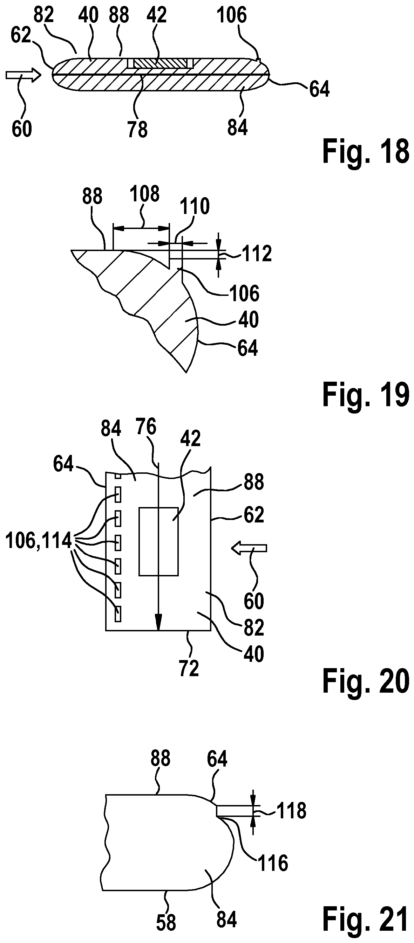

Figur 18 zeigt eine Querschnittsansicht eines Sensorträgers 40 gemäß einer fünften Ausführungsform. Auf der Oberseite des Sensorträgers 40 ist ein Vorsprung 106 angeordnet. Figur 18 zeigt eine Querschnittsansicht eines Sensorträgers 40 gemäß einer vierten Ausführungsform. Nachstehend werden lediglich die Unterschiede zu den vorhergehenden Ausführungsformen beschrieben und gleiche Bauteile sind mit gleichen Bezugszeichen versehen. Bei dem Sensorträger 40 der dritten Ausführungsform ist der Abströmabschnitt 84 symmetrisch bezüglich der Profilsehne 78 ausgebildet. An dem Abströmabschnitt 84 weist der Sensorträger 40 einen Vorsprung 106 auf. Der Vorsprung 106 befindet sich an der Hinterkante 64 und steht von dieser in Richtung der Oberseite 88 vor.

Figur 19 zeigt eine vergrößerte Querschnittsansicht des Sensorträgers 40 der fünften Ausführungsform. Zu erkennen ist der Vorsprung 106. Der Vorsprung 106 ist stufenförmig ausgebildet, so dass der Vorsprung 106 einen rechteckigen Querschnitt aufweist. Der Vorsprung 106 weist einen Abstand 108 von 0,5 mm bis 2,0 mm zu dem Sensorchip 42 in der Hauptströmungsrichtung 60 in dem Messkanal 28 auf, beispielsweise 1,0 mm. Der Vorsprung 80 weist eine Breite 110 von 0,1 mm bis 0,4 mm auf, beispielsweise 0,2 mm. Der Vorsprung 106 ist von dem Niveau der Oberseite 88 bzw. des Sensorchips 42 in einem Abstand 112 von -0,2 mm bis 0,4 mm angeordnet, beispielsweise 0,1 mm. Der Vorsprung 106 muss nicht zwangsläufig einen rechteckigen Querschnitt aufweisen. Andere Querschnittsformen, wie beispielsweise dreieckig, mehreckig oder abgerundet sind ebenfalls möglich.

Figur 20 zeigt eine Draufsicht eines Sensorträgers 40 gemäß einer sechsten Ausführungsform. Nachstehend werden lediglich die Unterschiede zu den vorhergehenden Ausführungsformen beschrieben und gleiche Bauteile sind mit gleichen Bezugszeichen versehen. Bei der sechsten Ausführungsform ist der Vorsprung 106 als Segmentierung 114 ausgebildet. Mit anderen Worten weist der Vorsprung 106 mehrere Unterbrechungen auf, so dass der Vorsprung 106 aus mehreren in Reihe angeordneten Segmenten besteht, die stromabwärts bezüglich der Hauptströmungsrichtung 60 in dem Messkanal 28 des Sensorchips 42 angeordnet sind und parallel zu der Erstreckungsrichtung 76 angeordnet sind.

Figur 21 zeigt eine Seitenansicht eines Sensorträgers 40 gemäß einer siebten Ausführungsform. Nachstehend werden lediglich die Unterschiede zu den vorhergehenden Ausführungsformen beschrieben und gleiche Bauteile sind mit gleichen Bezugszeichen versehen. Bei der siebten Ausführungsform weist der Sensorträger 40 an der Hinterkante 64 anstelle des Vorsprungs 106 eine Einkerbung oder Aussparung 116 auf. Die Aussparung 116 weist eine Höhe 118 von 0,1 mm bis 0,25 mm auf, beispielsweise 0,15 mm. Die Aussparung 116 erstreckt sich über die gesamte Länge der Hinterkante 64 in der Erstreckungsrichtung 76. Alternativ erstreckt sich die Aussparung 116 nur über einen Teil der Hinterkante 64.

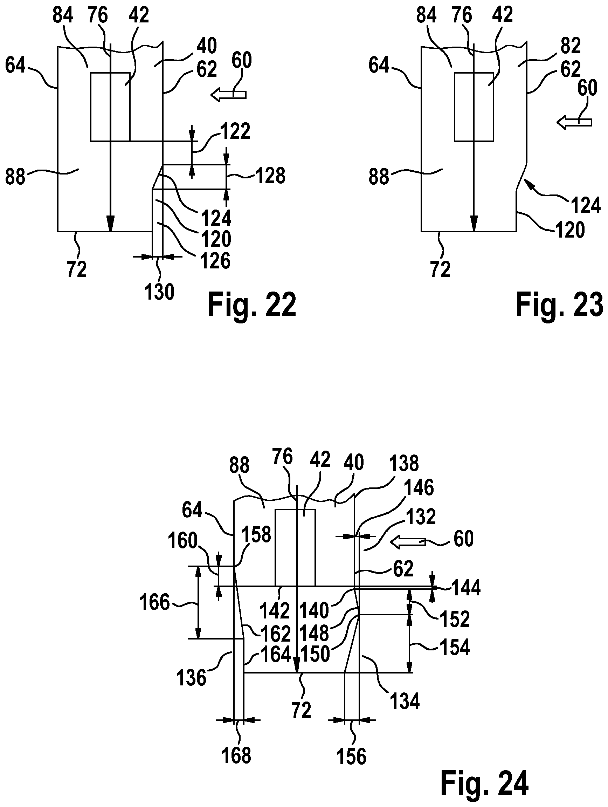

Figur 22 zeigt eine Draufsicht eines Sensorträgers 40 gemäß einer achten Ausführungsform. Nachstehend werden lediglich die Unterschiede zu den vorhergehenden Ausführungsformen beschrieben und gleiche Bauteile sind mit gleichen Bezugszeichen versehen. Bei der achten Ausführungsform weist die Anströmkante 62 eine Einkerbung oder Aussparung 120 auf. Die Aussparung 120 erstreckt sich nicht über die gesamte Länge der Anströmkante 62 in der Erstreckungsrichtung 76, sondern ist in einem Abstand 122 in der Erstreckungsrichtung 76 angeordnet. Die Aussparung 120 ist so ausgebildet, dass sich der Sensorträger 40 in Richtung zu der Stirnseite 72 verjüngt. Dabei kann sich der Sensorträger 40 linear über einen Abschnitt 124 verjüngen, der dann wieder in einen zu der Anströmkante 62 parallelen Abschnitt 126 übergeht. Der verjüngende Abschnitt 124 kann eine Abmessung 128 in der Erstreckungsrichtung 76 von 0,5 mm bis 5,0 mm aufweisen, beispielsweise 2,0 mm. Die Aussparung 120 kann eine Tiefe 130 von 0,5 mm bis 3,5 mm aufweisen, beispielsweise 1,0 mm.

Figur 23 zeigt eine Draufsicht eines Sensorträgers 40 gemäß einer neunten Ausführungsform. Nachstehend werden lediglich die Unterschiede zu den vorhergehenden Ausführungsformen beschrieben und gleiche Bauteile sind mit gleichen Bezugszeichen versehen. Bei der neunten Ausführungsform weist die Anströmkante 62 ebenfalls die Einkerbung oder Aussparung 120 auf. Allerdings verjüngt sich der Abschnitt 124 nicht linear, sondern weist eine stetige Krümmung auf.

Figur 24 zeigt eine Draufsicht eines Sensorträgers 40 gemäß einer zehnten Ausführungsform. Nachstehend werden lediglich die Unterschiede zu den vorhergehenden Ausführungsformen beschrieben und gleiche Bauteile sind mit gleichen Bezugszeichen versehen. Bei der zehnten Ausführungsform weist der Sensorträger 40 an der Anströmkante 62 eine erste Aussparung 132 und eine zweite Aussparung 134 auf. Der Sensorträger weist weiterhin eine dritte Aussparung 136 an der Hinterkante 64 auf. Die erste Aussparung 132 erstreckt sich von einem der Stirnseite 72 gegenüberliegenden Ende 138 des Sensorträgers 40 in der Erstreckungsrichtung 76 bis zu einem Punkt 140, der von einem der Stirnseite 72 zugewandten Endes 142 des Sensorchips 42 in der Erstreckungsrichtung um eine Distanz 144 von -2,0 mm bis 2,0 mm beabstandet ist, beispielsweise -1,0 mm. Die erste Aussparung 132 weist eine Tiefe 146 von 0,2 mm bis 1,0 mm auf, beispielsweise 0,5 mm. Daran angrenzend ist ein Übergangsabschnitt 148 ausgebildet, der sich zu einem der Hauptströmungsrichtung 60 in dem Messkanal entgegenweisenden Vorsprung 150 linear erstreckt. Der Übergangsabschnitt 148 weist eine Abmessung 152 in der Erstreckungsrichtung 76 von 0,1 mm bis 2,0 mm auf, beispielsweise 0,5 mm. In der Erstreckungsrichtung 76 zu der Stirnseite 72 grenzt die zweite Aussparung 134 an den Vorsprung 150, die den Sensorträger 40 in Richtung zu der Stirnseite 72 hin linear verjüngt. Die zweite Aussparung 134 weist eine Abmessung 154 in der Erstreckungsrichtung 76 von 0,1 mm bis 2,0 mm auf, beispielsweise 0,5 mm. Die zweite Aussparung 134 weist an ihrer tiefsten Stelle eine Tiefe 156 von 0,2 mm bis 1,0 mm auf, beispielsweise 0,5 mm. Die dritte Aussparung 136 erstreckt sich von einer Stelle 158, die entgegen der Erstreckungsrichtung 76 von dem der Stirnseite 72 zugewandten Ende 142 des Sensorchips 42 um eine Distanz 160 von -1,0 mm bis 2,0 mm versetzt ist, beispielsweise 1,0 mm. Die dritte Aussparung 136 weist einen sich linear verjüngenden Übergangsabschnitt 162 und einen sich parallel zu der Hinterkante 64 erstreckenden Abschnitt 164 auf. Der sich linear verjüngende Abschnitt 162 weist eine Abmessung 166 in der Erstreckungsrichtung 76 von 0,5 mm bis 3,0 mm auf, beispielsweise 1,5 mm. Der sich parallel zu der Hinterkante 64 erstreckende Abschnitt 164 weist eine Tiefe 168 von 0,2 mm bis 1,5 mm auf, beispielsweise 0,75 mm.

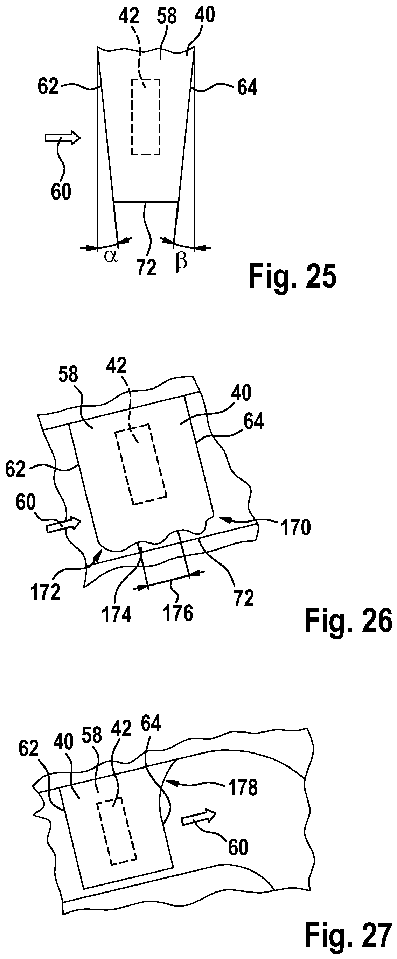

Figur 25 zeigt eine Unteransicht eines Sensorträgers 40 gemäß einer elften Ausführungsform. Nachstehend werden lediglich die Unterschiede zu den vorhergehenden Ausführungsformen beschrieben und gleiche Bauteile sind mit gleichen Bezugszeichen versehen. Bei der elften Ausführungsform verjüngt sich der Sensorträger 40 in der Erstreckungsrichtung 76 zu der Stirnseite 72 hin. Beispielsweise verjüngt sich die Hinterkante 64 linear in einem ersten Winkel α von 0 ° bis 20 °, beispielsweise 10 °, und die Anströmkante 62 verjüngt sich linear in einem zweiten Winkel β von 0 ° bis 30 °, beispielsweise 10 °. Der erste Winkel α und der zweite Winkel β können sich in ihrer Größe unterscheiden oder identisch sein.

Figur 26 zeigt eine Unteransicht eines Sensorträgers 40 gemäß einer zwölften Ausführungsform. Nachstehend werden lediglich die Unterschiede zu den vorhergehenden Ausführungsformen beschrieben und gleiche Bauteile sind mit gleichen Bezugszeichen versehen. Bei der zwölften Ausführungsform geht die Hinterkante 64 in einem ersten Radius 170 von 0,1 mm bis 2,0 mm, beispielsweise 1,0 mm, in die Stirnseite 72 über. Die Anströmkante 62 geht in einem zweiten Radius 172 von 0,1 mm bis 2,0 mm, beispielsweise 1,0 mm, in die Stirnseite 72 über. Des Weiteren weist die Stirnseite 72 sinusförmige Aussparungen 174 auf. Die sinusförmigen Aussparungen 174 sind so ausgebildet, dass ihre Form eine Wellenlänge 176 von 0,4 mm bis 5,0 mm aufweist, beispielsweise 1,0 mm.

Figur 27 zeigt eine Unteransicht eines Sensorträgers 40 gemäß einer dreizehnten Ausführungsform. Nachstehend werden lediglich die Unterschiede zu den vorhergehenden Ausführungsformen beschrieben und gleiche Bauteile sind mit gleichen Bezugszeichen versehen. Bei der dreizehnten Ausführungsform geht die Hinterkante 64 in einem Radius 178 von 0,1 mm bis 10,0 mm, beispielsweise 5,0 mm, in die angrenzende Kanalwand des Messkanals 28 über. Ein nicht tangentialer Übergang zur angrenzenden Kanalwand des Messkanals 28 ist möglich.

## Patentansprüche

1. Sensoranordnung (10) zur Bestimmung wenigstens eines Parameters eines durch einen Messkanal (28) strömenden fluiden Mediums, bei dem es sich um einen Ansaugluftmassenstrom einer Brennkraftmaschine handelt, wobei die Sensoranordnung (10) als Sensorgehäuse (12) einen in ein Strömungsrohr eingebrachten oder einbringbaren Steckfühler, in dem der Messkanal (28) ausgebildet ist, und mindestens einen in dem Messkanal (28) angeordneten Sensorchip (42) zur Bestimmung des Parameters des fluiden Mediums aufweist, wobei der Sensorchip (42) auf einem in den Messkanal (28) hineinragenden Sensorträger (40) angebracht ist, wobei der Sensorträger (40) so ausgebildet ist, dass er eine Profilsehne (78) aufweist, wobei der Sensorträger (40) bezüglich einer Hauptströmungsrichtung (60) des fluiden Mediums in dem Messkanal (28) einen Anströmabschnitt (82) stromaufwärts des Sensorchips (42) und einen Abströmabschnitt (84) stromabwärts des Sensorchips (42) aufweist, wobei der Abströmabschnitt (84) zumindest teilweise abgerundet oder zumindest teilweise keilförmig ausgebildet ist
**dadurch gekennzeichnet, dass**
die Profilsehne (78) eine Länge von 4,5 mm bis 6,5 mm aufweist.

2. Sensoranordnung (10) nach dem vorhergehenden Anspruch, wobei der Sensorträger (40) so ausgebildet ist, dass er in dem Abströmabschnitt (84) einen bezüglich der Profilsehne (78) asymmetrischen Querschnitt aufweist.

3. Sensoranordnung (10) nach dem vorhergehenden Anspruch, wobei der Sensorträger (40) eine Oberseite (88) und eine dieser gegenüberliegende Unterseite (58) aufweist, wobei der Sensorchip (42) auf der Oberseite (88) angeordnet ist, wobei ein Abstand der Oberseite (88) zu der Profilsehne (78) größer ist als ein Abstand der Unterseite (58) zu der Profilsehne (78).

4. Sensoranordnung (10) nach einem der vorhergehenden Ansprüche, wobei der Sensorträger (40) mindestens eine Segmentierung (114) aufweist.

5. Sensoranordnung (10) nach einem der vorhergehenden Ansprüche, wobei der Sensorträger (40) mindestens einen Vorsprung (106) aufweist.

6. Sensoranordnung (10) nach dem vorhergehenden Anspruch, wobei der Vorsprung (106) stufenförmig ausgebildet ist.

7. Sensoranordnung (10) nach einem der vorhergehenden Ansprüche, wobei der Sensorträger (40) an einem stromaufwärtigen Ende eine Anströmkante (62) und an einem stromabwärtigen Ende eine Hinterkante (64) aufweist, wobei die Anströmkante (62) und/oder die Hinterkante (64) mindestens eine Aussparung (116, 120, 132, 134, 136) aufweist.

8. Sensoranordnung (10) nach dem vorhergehenden Anspruch, wobei die Aussparung (116, 120, 132, 134, 136) dreieckig, halbrund, rechteckig und/oder sinusförmig ausgebildet ist.

9. Sensoranordnung (10) nach einem der vorhergehenden Ansprüche, wobei sich der Sensorträger (40) in einer Erstreckungsrichtung (76) in den Messkanal (28) erstreckt, wobei die Erstreckungsrichtung (76) im Wesentlichen senkrecht zu der Hauptströmungsrichtung (60) des fluiden Mediums in dem Messkanal (28) ist.

10. Sensoranordnung (10) nach dem vorhergehenden Anspruch, wobei sich der Sensorträger (40) in der Erstreckungsrichtung (76) verjüngt.

11. Sensoranordnung (10) nach dem vorhergehenden Anspruch, wobei sich der Sensorträger (40) in der Erstreckungsrichtung (76) symmetrisch oder asymmetrisch verjüngt.

## Claims

1. Sensor arrangement (10) for determining at least one parameter of a fluid medium flowing through a measuring channel (28), in which the flowing medium is an intake air mass flow of an internal combustion engine, the sensor arrangement (10) having as a sensor housing (12) a plug-in sensor which is introduced or can be introduced into a flow tube and in which the measuring channel (28) is formed, and at least one sensor chip (42), which is arranged in the measuring channel (28) and is intended for determining the parameter of the fluid medium, the sensor chip (42) being mounted on a sensor carrier (40) protruding into the measuring channel (28), the sensor carrier (40) being formed such that it comprises a profile chord (78), the sensor carrier (40) having an inflow portion (82) upstream of the sensor chip (42) and an outflow portion (84) downstream of the sensor chip (42), with respect to a main direction of flow (60) of the fluid medium in the measuring channel (28), the outflow portion (84) being formed as at least partially rounded or at least partially wedge-shaped,
**characterized in that**
the profile chord (78) has a length of 4.5 mm to 6.5 mm.

2. Sensor arrangement (10) according to the preceding claim, the sensor carrier (40) being formed such that it has in the outflow portion (84) an asymmetrical cross section with respect to the profile chord (78).

3. Sensor arrangement (10) according to the preceding claim, the sensor carrier (40) having an upper side (88) and an underside (58) opposite thereto, the sensor chip (42) being arranged on the upper side (88), a distance of the upper side (88) from the profile chord (78) being greater than a distance of the underside (50) from the profile chord (78).

4. Sensor arrangement (10) according to one of the preceding claims, the sensor carrier (40) having at least one segmentation (114).

5. Sensor arrangement (10) according to one of the preceding claims, the sensor carrier (40) having at least one projection (106).

6. Sensor arrangement (10) according to the preceding claim, the projection (106) being formed in a stepped shape.

7. Sensor arrangement (10) according to one of the preceding claims, the sensor carrier (40) having an inflow edge (62) at an upstream end and a trailing edge (64) at a downstream end, the inflow edge (62) and/or the trailing edge (64) having at least one recess (116, 120, 132, 134, 136).

8. Sensor arrangement (10) according to the preceding claim, the recess (116, 120, 132, 134, 136) being formed as triangular, half-round, rectangular and/or sinusoidal.

9. Sensor arrangement (10) according to one of the preceding claims, the sensor carrier (40) extending in a direction of extent (76) into the measuring channel (28), the direction of extent (76) being substantially perpendicular to the main direction of flow (60) of the fluid medium in the measuring channel (28) .

10. Sensor arrangement (10) according to the preceding claim, the sensor carrier (40) tapering in the direction of extent (76).

11. Sensor arrangement (10) according to the preceding claim, the sensor carrier (40) tapering symmetrically or asymmetrically in the direction of extent (76).

## Revendications

1. Agencement de détection (10) permettant de déterminer au moins un paramètre d'un milieu fluide s'écoulant dans un conduit de mesure (28), ledit milieu étant un débit massique d'air d'aspiration d'un moteur à combustion interne, l'agencement de détection (10) sous forme de boîtier de capteur (12) présentant une sonde enfichable qui est ou peut être introduite dans un tuyau d'écoulement dans lequel est réalisé le conduit de mesure (28), et au moins une puce de capteur (42) disposée dans le conduit de mesure (28) pour déterminer le paramètre du milieu fluide, la puce de capteur (42) étant agencée sur un support de capteur (40) faisant saillie dans le conduit de mesure (28), le support de capteur (40) étant réalisé de telle sorte qu'il présente une corde de profil (78), le support de capteur (40) présentant par rapport à une direction d'écoulement principale (60) du milieu fluide dans le conduit de mesure (28) une partie d'écoulement d'entrée (82) en amont de la puce de capteur (42) et une partie d'écoulement de sortie (84) en aval de la puce de capteur (42), la partie d'écoulement de sortie (84) étant réalisée de manière au moins partiellement arrondie ou au moins partiellement en forme de coin,
**caractérisé en ce que** la corde de profil (78) présente une longueur de 4,5 mm à 6,5 mm.

2. Agencement de détection (10) selon la revendication précédente, dans lequel le support de capteur (40) est réalisé de telle sorte qu'il présente dans la partie d'écoulement de sortie (84) une section transversale asymétrique par rapport à la corde de profil (78).

3. Agencement de détection (10) selon la revendication précédente, dans lequel le support de capteur (40) présente une face supérieure (88) et une face inférieure opposée à celle-ci (58), la puce de capteur (42) étant disposée sur la face supérieure (88), une distance de la face supérieure (88) à la corde de profil (78) étant supérieure à une distance de la face inférieure (58) à la corde de profil (78).

4. Agencement de détection (10) selon l'une quelconque des revendications précédentes, dans lequel le support de capteur (40) présente au moins une segmentation (114).

5. Agencement de détection (10) selon l'une quelconque des revendications précédentes, dans lequel le support de capteur (40) présente au moins une saillie (106).

6. Agencement de détection (10) selon la revendication précédente, dans lequel la saillie (106) est réalisée en forme de gradin.

7. Agencement de détection (10) selon l'une quelconque des revendications précédentes, dans lequel le support de capteur (40) présente à une extrémité amont un bord d'écoulement d'entrée (62) et à une extrémité aval un bord arrière (64), le bord d'écoulement d'entrée (62) et/ou le bord arrière (64) présentant au moins un évidement (116, 120, 132, 134, 136) .

8. Agencement de détection (10) selon la revendication précédente, dans lequel l'évidement (116, 120, 132, 134, 136) est réalisé de manière triangulaire, semi-circulaire, rectangulaire et/ou sinusoïdale.

9. Agencement de détection (10) selon l'une quelconque des revendications précédentes, dans lequel le support de capteur (40) s'étend dans une direction d'étendue (76) dans le conduit de mesure (28), la direction d'étendue (76) étant substantiellement perpendiculaire à la direction d'écoulement principale (60) du milieu fluide dans le conduit de mesure (28).

10. Agencement de détection (10) selon la revendication précédente, dans lequel le support de capteur (40) s'amincit dans la direction d'étendue (76) .

11. Agencement de détection (10) selon la revendication précédente, dans lequel le support de capteur (40) s'amincit de manière symétrique ou asymétrique dans la direction d'étendue (76).
